Europäisches Patentamt

European Patent Office

Office européen des brevets

(19)

(11) Numéro de publication: **0 274 960 B1**

## (12) FASCICULE DE BREVET EUROPEEN

(45) Date de publication de fascicule du brevet:
**21.11.91**

(51) Int. Cl.⁵: **B43K 5/14, B29C 65/06**

(21) Numéro de dépôt: **87402996.0**

(22) Date de dépôt: **28.12.87**

(54) **Cartouche réservoir d'encre pour stylographe rechargeable et procédé de fabrication d'une telle cartouche.**

(30) Priorité: **29.12.86 FR 8618285**

(43) Date de publication de la demande:
**20.07.88 Bulletin 88/29**

(45) Mention de la délivrance du brevet:
**21.11.91 Bulletin 91/47**

(84) Etats contractants désignés:
**AT BE CH DE GB IT LI LU NL SE**

(56) Documents cités:
**FR-A- 1 411 807**
**FR-A- 1 569 112**
**US-A- 2 931 338**
**US-A- 3 332 400**

(73) Titulaire: **Société STYPEN**
**41 rue de Paradis**
**Joigny (Yonne)(FR)**

(72) Inventeur: **Vincent, André**
**8 rue Belle Pierre**
**Auxerre (Yonne)(FR)**

(74) Mandataire: **Petit, Hélène**
**Cabinet Hélène Petit 94, Avenue Kléber**
**F-75116 Paris(FR)**

Rank Xerox (UK) Business Services

## Description

La présente invention est relative à une cartouche à encre pour stylographe rechargeable, présentant une dimension longitudinale suffisante pour contenir un volume d'encre représentant notamment un poids sensiblement égal au double de celui d'une cartouche courte classique dont le profil est les dimensions correspondent à une présentation bien connue, utilisée avec la plupart des fabrications nationales ou internationales.

On connaît déjà dans la technique des réalisations de cartouches réservoir d'encre, dites cartouches longues, dont la contenance est largement supérieure à celle d'une cartouche courte et vise à avoisiner le double du contenu de celle-ci. Toutefois, dans ces réalisations, le poids maximal d'encre ne dépasse pas ordinairement 1,3 à 1,6 gr. et n'atteint pas en tous cas 1,8 gr., c'est-à-dire exactement deux fois celui d'une cartouche courte de 0,9 gr. Par ailleurs, ces cartouches longues connues sont fabriquées par un procédé de moulage par injection avec tige axiale réservant le volume interne et présentant un corps obturé à une extrémité par un bouchon, tandis qu'elles comprennent à l'autre un opercule à membrane. Celui-ci est prévu pour être percuté par un embout disposé dans la tête du stylographe à l'opposé du support de la plume comme par exemple envisagé dans le brevet FR-A- 1 569 112, cet embout comportant un canal étroit par lequel l'encre de la cartouche s'écoule par capillarité vers la plume pour imprégner convenablement celle-ci.

Or, du fait de ce procédé de fabrication, le corps de cartouche n'est pas parfaitement cylindrique, comporte des épaisseurs de paroi non uniformes et surtout, du fait de sa longueur et des traitements nécessaires pour fixer sur celui-ci le bouchon de fermeture et l'opercule à membrane, présente souvent une forme plus ou moins arquée qui peut conduire à rejeter la cartouche comme impropre à sa commercialisation si la courbure est trop accentuée, et en tous cas, limite le contenu réel de l'encre pouvant être emmagasinée dans celle-ci. C'est la raison pour laquelle une telle cartouche ne permet pas, quelles que soient les précautions prises et le soin apporté à sa fabrication, de remplacer, en volume, exactement deux cartouches courtes au standard international.

Le brevet USA- 2 931 338 illustre une cartouche à paroi mince obtenue par extrusion et non par moulage, ce qui évite en partie les inconvénients précédents du fait de la régularité et de l'homogénéité de cette paroi. En revanche, ce document illustre une réalisation dans laquelle les extrémités de la cartouche sont fermées par un bouchon obturateur et un opercule à membrane dans des conditions qui ne permettent pas une parfaite régularité des liaisons réalisées.

La présente invention concerne une cartouche réservoir d'encre pour stylographe qui évite ces inconvénients en lui permettant de présenter un volume exactement égal au double de celui d'une cartouche courte, avec une qualité et une régularité de fabrication parfaitement constantes, y compris au droit de ses bouchons ou opercules d'extrémité, un prix de revient réduit et une sécurité d'emploi améliorée vis-à-vis des réalisations actuellement disponibles dans la technique.

A cet effet, la cartouche considérée, comportant un corps cylindrique allongé, de longueur appropriée, muni a une extrémité d'un bouchon obturateur et à l'autre d'un opercule à membrane pour l'écoulement une fois perforé, de l'encre contenue dans la cartouche, ce corps étant constitué par un tube à paroi mince, en plastique extrudé, le bouchon obturateur et l'opercule a membrane étant solidarisés sur les extrémités correspondantes du corps, se caractérise en ce que le bouchon obturateur comporte une jupe cylindrique propre à pénétrer à frottement glissant dans l'extrémité correspondante du tube constituant le corps, cette jupe étant fermée par un fond transversal disposé dans le tube et étant prolongée à l'extérieur de ce tube par une collerette ouverte de diamètre légèrement supérieur à celui du tube formant butée d'appui du bouchon sur le bord de ce tube, ladite collerette étant à son tour terminée par un anneau creux s'étendant sur une hauteur telle que la profondeur du bouchon jusqu'au fond transversal soit légèrement supérieure a celle d'un embout percuteur pour l'alimentation de la plume du stylographe, et ce que l'opercule à membrane présente une structure analogue à celle du bouchon obturateur mais une profondeur inférieure à celle de l'embout percuteur qui peut ainsi perforer la membrane lorsque la cartouche coiffe ledit embout.

L'invention concerne également un procédé de fabrication de la cartouche ci-dessus, caractérisé en ce qu'il consiste à extruder un tube cylindrique en plastique à paroi mince, à monter à frottement à chacune des extrémités dudit tube et à solidariser de la paroi interne de celui-ci successivement un bouchon obturateur puis un opercule à membrane, avec entre ces deux étapes remplissage de la cartouche par un volume d'encre adapté, la liaison du bouchon et de l'opercule sur la paroi du tube étant réalisée par thermosoudage au moyen d'une broche rotative engagée respectivement par l'extérieur du tube dans la jupe du bouchon et celle de l'opercule et amenée en contact avec la paroi du tube

D'autres caractéristiques d'une cartouche réservoir selon l'invention et de son procédé de fabrication apparaîtront encore a travers la description qui suit d'un exemple de réalisation, donné à titre indicatif et non limitatif, en référence au dessin annexé sur lequel :

- La Figure 1 montre les éléments constitutifs de la cartouche considérée avant montage ;
- La Figure 2 est une vue en coupe longitudinale partielle de la partie d'extrémité d'un stylographe rechargeable, montrant la percussion de l'opercule à membrane de la cartouche par l'embout correspondant pour l'utilisation de ladite cartouche ;
- La Figure 3 est une vue également en coupe partielle de la cartouche montée dans le corps du stylographe avec son bouchon de protection engagé sur le percuteur ;
- La Figure 4 permet de préciser le processus de fixation du bouchon et de l'opercule sur les extrémités du tube de la cartouche.

Dans l'exemple considéré, la cartouche réservoir selon l'invention est constituée d'un corps formé par un tube cylindrique en matière plastique 1, à paroi mince, de l'ordre notamment du 1/10 de mm, sur les extrémités duquel sont destinés à s'adapter en fermant hermétiquement ce tube un bouchon creux de fermeture 2 et un opercule à membrane 3.

Le bouchon comporte une jupe 4 dont le diamètre extérieur est sensiblement égal au diamètre interne du tube 1 pour s'y engager à frottement doux, avant d'en être solidarisé de la façon précisée plus loin. Il comporte par ailleurs une collerette extérieure 5 de diamètre plus important propre à venir en butée sur l'extrémité du tube 1 quand le bouchon est monté dans celui-ci, cette collerette étant prolongée par un anneau 6 sur une distance telle que la profondeur du bouchon creux 3, depuis son extrémité ouverte jusqu'à un fond 7 épais prévu à l'opposé en bout de la jupe 4, corresponde à une dimension $l_1$ exactement déterminée, telle que définie plus loin.

L'opercule 3 présente une structure analogue à celle du bouchon 2 avec une jupe 8, une collerette de butée 9 et un anneau 10, ainsi que, au lieu d'un fond épais, une membrane mince 11, la profondeur de l'ensemble correspondant cette fois à une dimension $l_2$, inférieure à $l_1$.

La longueur du tube 1 et la profondeur des jupes 4 et 8 sont déterminées par construction de telle sorte que, selon le diamètre interne du tube, la contenance de la cartouche corresponde à un poids d'encre égal à 1,8 gr., soit exactement deux fois celui d'une cartouche courte de format international.

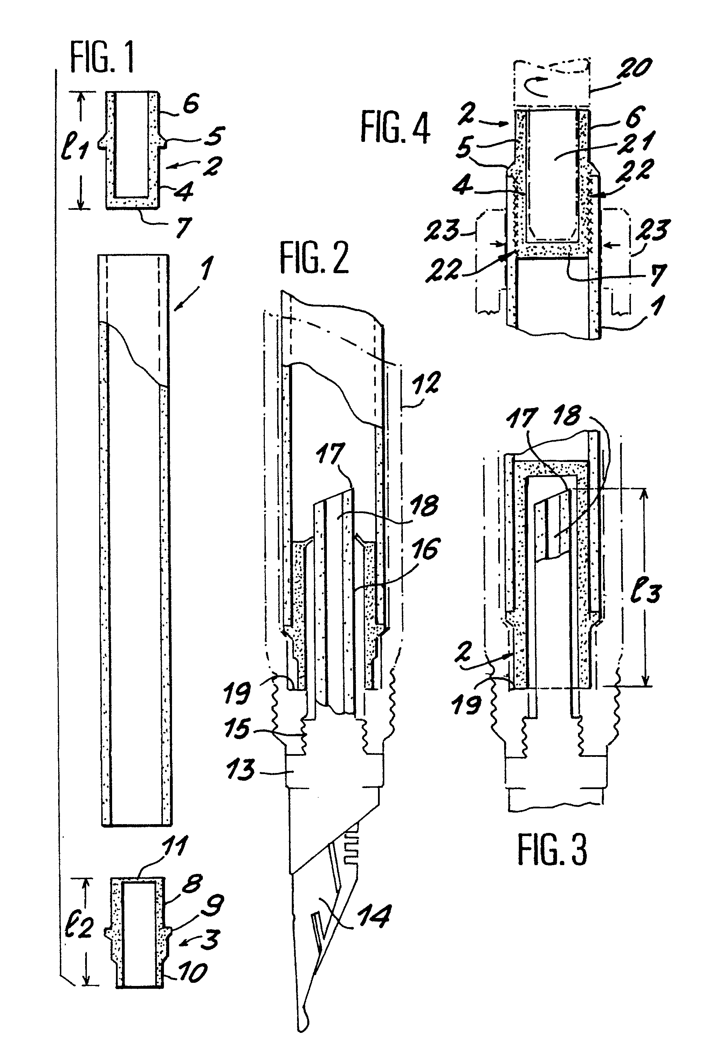

Sur les Figures 2 et 3, on a représenté la cartouche selon l'invention en vue partielle, illustrée montée dans le corps 12 d'un stylographe de type connu. Celui-ci comporte un embout 13 sur lequel est engagé la plume 14 et qui comporte a l'intérieur du corps un bossage 15 prolongé par un percuteur 16. Celui-ci est muni à cet effet à son extrémité opposée d'une partie légèrement en biseau 17 et présente intérieurement un canal capillaire 18 pour l'écoulement de l'encre de la cartouche lors de l'emploi de celle-ci.

Sur la Figure 2, la cartouche d'encre est ainsi représentée avec l'anneau de l'opercule 3 en butée contre une partie interne 19 du corps 12, disposée de telle sorte que la partie du percuteur 16 qui s'étend dans l'anneau 10 et la jupe 8 présente une dimension longitudinale $l_3$ qui, à l'échelle, est supérieure à $l_2$ mais inférieure à $l_1$. Dans ces conditions, par suite de l'appui de l'anneau 10 sur la butée 19, la membrane mince de l'opercule se trouve percée par le percuteur 16, permettant à l'encre dans la cartouche de s'écouler dans le canal 18 vers la plume 14. En revanche, si la cartouche est retournée et montée en réserve dans le corps 12 comme représenté en partie sur la Figure 3, le percuteur ne peut pas atteindre le fond 7, la cartouche restant étanche, cette position étant par exemple celle adoptée pour la présentation du stylographe à la vente, avant usage, l'utilisateur ayant seulement en vue de celui-ci à retourner la cartouche dans le corps 12 et à percer l'opercule comme dit ci-dessus, de façon d'ailleurs classique dans ce genre d'article.

Sur la Figure 4 est schématisée une broche rotative 20 dont l'extrémité tournante 21 est adaptée, lors de la fabrication des cartouches, à s'engager dans le bouchon 2 ou l'opercule 3 une fois ceux-ci montés dans les extrémités du tube 1, afin de réaliser par frottement et échauffement dans la zone 22, un soudage étanche de ces accessoires sur le tube, celui-ci étant maintenu au cours de cette opération par l'extérieur dans un mandrin 23. Bien entendu, le processus de fabrication prévoit dans un premier temps la fixation du bouchon, puis le remplissage de la cartouche par le volume d'encre convenable et enfin la mise en place et la fixation de l'opercule.

On réalise ainsi une cartouche réservoir dont le volume peut être sensiblement accru vis-à-vis de celui des mêmes articles disponibles dans le commerce, sans augmentation corrélative de sa longueur, le gain réalisé s'effectuant en réduisant sensiblement l'épaisseur du tube utilisé, grâce a un procédé de fabrication différent de celui mis en oeuvre de façon usuelle pour ces autres articles. De plus, la cartouche selon l'invention présente une forme parfaitement cylindrique, limitant au maximum les rejets en fabrication. Enfin, elle permet d'obtenir des prix de revient sensiblement plus réduits, grâce à l'économie de matière et à la simplicité de son processus d'élaboration, en procurant a l'utilisateur une plus longue durée d'emploi.

## Revendications

1. Cartouche réservoir d'encre pour stylographe rechargeable, comportant un corps cylindrique allongé, de longueur appropriée, muni a une extrémité d'un bouchon obturateur et à l'autre d'un opercule à membrane pour l'ecoulement, une fois perforé, de l'encre contenue dans la cartouche, ce corps étant constitué par un tube (1) à paroi mince, en plastique extrudé, le bouchon obturateur (2) et l'opercule à membrane (3) étant solidarisés sur les extrémités correspondantes du corps, caractérisée en ce que le bouchon obturateur (2) comporte une jupe cylindrique (4) propre à pénétrer à frottement glissant dans l'extrémité correspondante du tube (1) constituant le corps, cette jupe (4) étant fermée par un fond transversal (7) disposé dans le tube et étant prolongée à l'extérieur du tube par une collerette ouverte (5) de diamètre légèrement supérieur à celui du tube formant butée d'appui du bouchon sur le bord de ce tube, ladite collerette étant à son tour terminée par un anneau (6) creux s'étendant sur une hauteur telle que la profondeur du bouchon jusqu'au fond transversal (7) soit légèrement supérieure à celle d'un embout percuteur (16) pour l'alimentation de la plume (14) du stylographe, et en ce que l'opercule à membrane (3) présente une structure analogue à celle du bouchon obturateur (2) mais une profondeur inférieure à celle de l'embout percuteur (16) qui peut ainsi perforer la membrane (11) lorsque la cartouche coiffe ledit embout.

2. Procédé pour la réalisation d'une cartouche selon la revendication 1 consistant à extruder un tube cylindrique (1) en plastique à paroi mince, à monter à frottement à chacune des extrémités dudit tube et à solidariser de la paroi interne de celui-ci successivement un bouchon obturateur (2) puis un opercule (3) à membrane, avec entre ces deux étapes remplissage de la cartouche par un volume d'encre adapté, la liaison du bouchon et de l'opercule sur la paroi du tube étant réalisée par thermosoudage au moyen d'une broche rotative (20) engagée respectivement par l'extérieur du tube dans la jupe (4) du bouchon et celle (9) de l'opercule et amenée en contact avec la paroi du tube (1).

## Claims

1. Ink reservoir cartridge for rechargeable fountain pen, comprising an elongated cylindrical body of suitable length, provided at one end with an obturator stopper and at the other with a diaphragm cap which when perforated releases the ink contained in the cartridge, this body being constituted by a thin-walled tube (1) of extruded plastic, the obturator stopper (2) and the diaphragm cap (3) being permanently joined to the corresponding ends of the body, characterized in that the obturator stopper (2) comprises a cylindrical skirt (4) which fits with sliding friction into the corresponding end of the tube (1) forming the body, this skirt (4) being closed off by a transverse end (7) disposed inside the tube and being extended to outside the tube by an open collar (5), with a diameter slightly larger than that of the tube, forming a bearing abutment for the stopper on the rim of the tube, said collar being in turn terminated by a hollow ring (6) extending to a height such that the depth of the stopper to the transverse end (7) is slightly greater than that of a plunger tip (16) for supplying the nib (14) of the fountain pen, and in that the diaphragm cap (3) has a similar structure to that of the obturator stopper (2) but has a depth which is smaller than that of the plunger tip (16) which is thus able to perforate the diaphragm (11) when the cartridge caps said plunger tip.

2. Process for the manufacture of a cartridge according to claim 1 consisting of extruding a thin-walled cylindrical plastic tube (1), of assembling with a friction fit at each end of said tube and of permanently joining to the interior wall thereof successively an obturator stopper (2) then a diaphragm cap (3), with between these two steps filling of the cartridge with a suitable quantity of ink, the joining of the stopper and of the cap to the wall of the tube being realised by heat fusing by means of a rotary pin (20) engaged respectively via the exterior of the tube into the skirt (4) of the stopper and that (9) of the cap and brought into contact with the wall of the tube (1).

## Patentansprüche

1. Tinten-Patronenreservoir für einen wiederaufladbaren Füllhalter mit einem langgestreckten zylindrischen Körper passender Länge, der an einem Ende mit einer Absperrdichtung versehen ist und am anderen Ende mit einem Membrandeckel, um, falls dieser einmal durchstochen ist, in der Patrone enthaltene Tinte entnehmen zu können, wobei der Körper einen Tubus (1) mit dünner Wandung aufweist, der aus Kunststoff extrudiert ist, und die Absperrdichtung (2) sowie der Membrandeckel (3) an zugeordneten Enden des Körpers befestigt sind,
dadurch gekennzeichnet, daß die Absperrdichtung (2) einen zylindrischen Mantel (4) aufweist, der so bemessen ist, daß er reibschlüssig glatt in ein entsprechendes Ende des Tubus (1), welcher den Körper bildet, einführbar ist, daß der Mantel (4) mittels eines quer verlaufenden Bodens (7) im Tubus verschlossen ist und auSerhalb des Tubus einen offenen Kragen (5) aufweist, dessen Durchmesser etwas größer ist als derjenige des Tubus, so daß mit der Kante des Tubus eine Dichtung gebildet wird, daß der genannte Kragen in einen hohlen Ring (6) ausläuft, der sich bis zu einer Höhe erstreckt, die der Tiefe der Dichtung (2) bis zum Querboden (7) entspricht, jedoch etwas hinausragt über einen Durchstechansatz (16) zum Versorgen der Feder (14) des Füllhalters, daß der Membrandeckel (3) eine Struktur aufweist, die derjenigen der Verschlußdichtung (2) entspricht, wobei jedoch die Tiefe geringer ist als diejenige des Durchstechansatzes (16), der die Membran (11) durchsticht, wenn die Patrone den genannten Ansatz erreicht.

2. Verfahren zum Herstellen einer Patrone gemäß Anspruch 1 mit folgenden Schritten:
Extrudieren eines zylindrischen Tubus (1) aus Kunststoff mit dünner Wand, Montieren nacheinander einer Verschlußdichtung (2) und danach eines Membrandeckels (3) mittels Reibschluß an den Enden des genannten Tubus einschließlich Befestigung an dessen Innenwand, wobei zwischen den beiden Teilen ein Füllraum für die Patrone verbleibt, der entsprechend angepaßt ist, und wobei die Verbindung der Dichtung und des Deckels an der Wand des Tubus durch Thermoverschweißung mittels eines Drehstiftes (20) erfolgt, der außerhalb des Tubus in Eingriff kommt mit dem Mantel (4) der Dichtung und des Deckels (3) und in Kontakt steht mit der Wand des Tubus (1).

FIG. 1

FIG. 2

FIG. 3

FIG. 4